# EUROPÄISCHE PATENTSCHRIFT

(11) **EP 0 676 311 B1**
(45) Veröffentlichungstag und Bekanntmachung des Hinweises auf die Patenterteilung: **24.05.2000**
(21) Anmeldenummer: 95101656.7
(22) Anmeldetag: 08.02.1995
(51) Int. Cl.: B60Q 3/02

(54) **Innenbeleuchtung für Fahrzeuge**
Interior lighting for vehicle
Eclairage intérieur pour véhicule

(30) Priorität: 08.03.1994 DE 4407616
(43) Veröffentlichungstag der Anmeldung: 11.10.1995
(73) Patentinhaber: ROBERT BOSCH GMBH, 70442 Stuttgart (DE)
(72) Erfinder: Weith, Rudolf, D-76135 Karlsruhe (DE)

(56) Entgegenhaltungen:
- DE-A- 4 134 558
- DE-A- 4 201 051
- DE-A- 4 309 817
- FR-A- 2 451 845
- US-A- 5 047 688

## Beschreibung

### STAND DER TECHNIK

Die Erfindung betrifft eine Innenbeleuchtung für Fahrzeuge nach der Gattung des Hauptanspruchs.

Die Innenbeleuchtung von Fahrzeugen, insbesondere Kraftfahrzeugen, weist im allgemeinen drei Betriebsmodi auf, die durch drei Schaltstellungen eines Schalters vorgegeben werden können. In der ersten Schaltstellung ist die Innenbeleuchtung ständig ausgeschaltet, in der zweiten Schaltstellung ständig eingeschaltet und in der dritten Schaltstellung nur bei offener Tür eingeschaltet. Für den letzten Betriebsmodus kann noch ein Zeitglied vorgesehen sein, das nach Schließen aller Türen die Innenbeleuchtung noch für eine vorgebbare Zeit im eingeschalteten Zustand hält.

Bleibt die Innenbeleuchtung beim Verlassen des Fahrzeugs versehentlich dauernd eingeschaltet, so besteht die Gefahr, daß bei längerer Abwesenheit des Fahrers, z.B. wahrend der Nacht, die Fahrzeugbatterie so weit entladen wird, daß das Fahrzeug nicht mehr gestartet werden kann. Insbesondere bei Innenbeleuchtungen, bei denen die Innenleuchten nach dem Schließen der Tür noch für eine bestimmte Zeit eingeschaltet bleiben, kann der Fahrer beim Verlassen des Fahrzeugs nicht sofort erkennen, ob dieser Automatikmodus vorliegt oder ob der Betriebsmodus vorliegt, in dem die Innenleuchten ständig eingeschaltet sind.

Aus der US-A 5 047 688 ist eine Steuerung einer Innenbeleuchtung eines Kraftfahrzeugs bekannt, die einen Zeitgeber enthält, der die Innenbeleuchtung nach Ablauf der vom Zeitgeber vorgegebenen Zeit abschaltet. Das vom Zeitgeber bereitgestellte Abschaltsignal wird unterdrückt, falls ein Zündschalter eingeschaltet ist. Wenn der Zündschalter nach Ablauf der vom Zeitgeber vorgegebenen Zeit abgeschaltet wird, erlischt die Innenbeleuchtung unmittelbar. Ein erneutes Starten des Zeitgebers ist nicht vorgesehen.

### VORTEILE DER ERFINDUNG

Die erfindungsgemäße Innenbeleuchtung mit den kennzeichnenden Merkmalen des Hauptanspruchs hat demgegenüber den Vorteil, daß auch im Betriebsmodus "dauernd eingeschaltet" die Innenbeleuchtung nach einer vorgebbaren Zeit ausgeschaltet wird, wenn keinerlei Aktivitäten des Fahrers oder einer anderen Person mehr aufgetreten sind. Durch die Wahl einer ausreichend langen Zeitdauer der Haltezeit des Zeitglieds wird gewährleistet, daß die Funktion Dauerlicht im Prinzip erhalten bleibt, daß andererseits jedoch eine gefährliche oder lästige Entladung der Batterie sicher vermieden wird.

Durch die in den Unteransprüchen aufgeführten Maßnahmen sind vorteil hafte Weiterbildungen und Verbesserungen der im Anspruch 1 angegebenen Innenbeleuchtung möglich.

Zur Erkennung von Fahreraktivitäten oder Aktivitäten einer anderen Person, die zu einer Verlängerung der Brenndauer der Leuchte führen sollen, ist das Zeitglied in vorteilhafter Weise durch einen Türschalter, Handschuhfachschalter oder Sonnenblendenschalter als weiteren Schalter retriggerbar. Als solcher weiterer Schalter kann auch zweckmäßigerweise ein Steuerschalter zur Betätigung eines Fensters, Schiebedachs, Lüfters, Radios, Außenlichts, Wischers oder Sitzes dienen. Weiterhin kann das Zeitglied durch Betätigung eines Verbrauchers, wie eines Bord-computers oder Zigarettenanzünders, getriggert werden.

Um zu gewährleisten, daß bei eingeschalteter Zündanlage die Leuchte in jedem Falle dauernd eingeschaltet bleibt, ist eine das Zeitglied bei eingeschalteter Zündanlage überbrückende oder unwirksam machende Schalteinrichtung vorgesehen. Eine eingeschaltete Zündanlage ist nämlich in jedem Falle ein Indiz, daß noch Fahreraktivitäten vorliegen.

Es hat sich als zweckmäßig erwiesen, das Zeitglied mit einer Einrichtung zur Intervallbetätigung der Leuchte kurz vor oder bei Ablauf der Haltezeit zu versehen. Hierdurch wird der Fahrer oder eine andere Person auf das bevorstehende Ausschalten der Leuchte hingewiesen, so daß zur Verhinderung eines solchen Ausschaltens einer der genannten Auslösevorgänge bewirkt werden kann, wenn ein völliges Ausschalten der Leuchte verhindert werden soll. Diese Einrichtung zur Intervallbetätigung der Leuchte ist zweckmäßigerweise durch ein Signalende des Ausgangssignals des Zeitglieds triggerbar.

Die Haltezeit des Zeitglieds beträgt wenigstens 15 Minuten, sie kann jedoch auch beispielsweise 1 Stunde oder mehr betragen. Diese Zeitdauer sollte so bemessen sein, daß einerseits de facto ein Dauerbetrieb der Leuchte erreicht wird, daß andererseits diese Zeit so kurz ist, daß eine wesentliche Belastung der Batterie verhindert wird.

Die wenigstens eine Leuchte und der die Leuchte schaltende Schalter sind in vorteilhafter Weise an wenigstens einer Anschlußstation eines Multiplex-Systems angeschlossen, wobei das Zeitglied in der Anschlußstation oder in einer Steuerzentrale des Multiplex-Systems angeordnet ist. Eine Aktivität wenigstens einer weiteren der Anschlußstationen des Multiplex-Systems dient dabei zur Triggerung des Zeitglieds, so daß in einfacher Weise die verschiedensten Schalter und Verbraucher zur Feststellung einer Aktivität des Fahrers oder einer weiteren Person herangezogen werden können, ohne daß eine entsprechende zusätzliche Verkabelung erforderlich wäre.

### ZEICHNUNG

Zwei Ausführungsbeispiele der Erfindung sind in der Zeichnung dargestellt und in der nachfolgenden Beschreibung näher erläutert. Es zeigen:
- Fig. 1: ein Blockschaltbild eines ersten Ausführungsbeispiels der Erfindung und
- Fig. 2: eine schematische Darstellung eines zweiten Ausführungsbeispiels als Bestandteil eines Multiplex-Systems.

### BESCHREIBUNG DER AUSFÜHRUNGSBEISPIELE

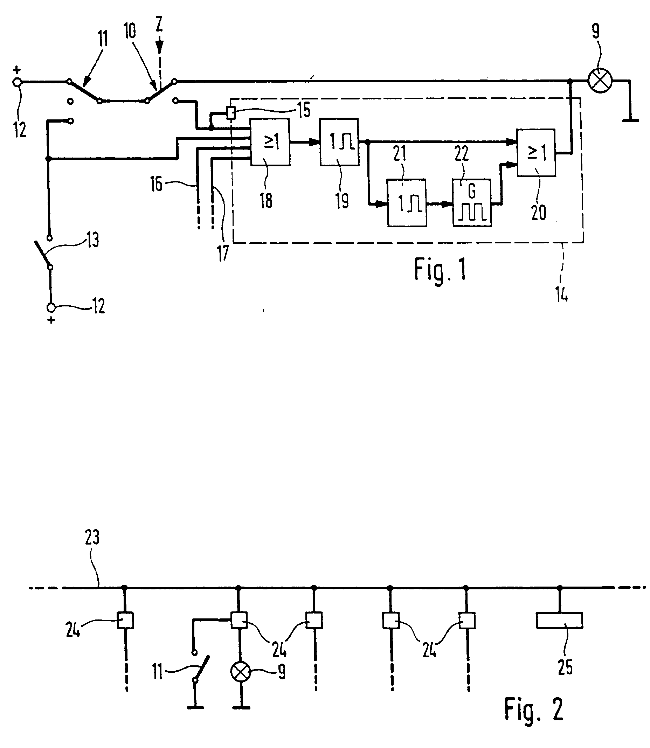

Bei dem in Fig. 1 dargestellten ersten Ausführungsbeispiel ist eine Leuchte 9 zur Beleuchtung des Inneren eines Fahrzeugs, beispielsweise eines Kraftfahrzeugs, mit einem Anschluß an Masse und mit dem anderen Anschluß über einen ersten Schalter 10 und einen in Reihe dazu geschalteten zweiten Schalter 11 an den positiven Pol 12 einer nicht dargestellten Fahrzeugbatterie angeschlossen. Der zweite Schalter 11 ist der übliche manuelle Betätigungsschalter für die Innenbeleuchtung und weist drei Schaltstellungen auf, die drei Betriebsmodi entsprechen. In der dargestellten Schaltstellung ist die Leuchte 9 dauernd eingeschaltet, sofern sich der erste Schalter 10 in der dargestellten Schaltstellung befindet. In der zweiten mittleren Schaltstellung des zweiten Schalters 11 ist die Leuchte 9 dauernd ausgeschaltet, und in der dritten unteren Schaltstellung des zweiten Schalters 11 ist die Leuchte 9 nur bei einer geöffneten Tür des Fahrzeugs eingeschaltet, da in dieser Schaltstellung ein Türschalter 13 vor den positiven Pol 12 der Batterie geschaltet ist. Dieser Türschalter 13 ist nur bei geöffneter Tür geschlossen, wobei in der Praxis jeder Tür ein solcher Türschalter 13 zugeordnet ist und alle Türschalter parallelgeschaltet sind. Selbstverständlich können zur Intensivierung der Innenbeleuchtung auch mehrere Leuchten 9 zueinander parallelgeschaltet sein.

Mit Ausnahme des ersten Schalters 10 entspricht die bisherige Beschreibung einer üblichen Fahrzeug-Innenbeleuchtung. Dieser erste Schalter 10 wird in Abhängigkeit des Betriebszustands der Zündanlage des Fahrzeugs gesteuert. Bei eingeschalteter Zündanlage befindet sich dieser erste Schalter 10 in der dargestellten Schaltstellung. Bei ausgeschalteter Zündanlage verbindet er dagegen den zweiten Schalter 11 mit einem ersten Triggereingang einer Steuerstufe 14 und gleichzeitig mit einem Spannungsversorgungsanschluß 15 dieser Steuerstufe 14. Weitere Triggereingänge der Steuerstufe 14 sind mit dem Türschalter 13 und gegebenenfalls weiteren nicht dargestellten Türschaltern sowie mit weiteren Verbrauchern und Schaltern des Fahrzeugs verbunden, was schematisch durch zwei weitere Triggerleitungen 16, 17 dargestellt ist. Diese weiteren Schalter und Verbraucher sind solche, deren Betätigung eine Aktivität des Fahrers oder einer weiteren Person anzeigen sollen. Hierbei kann es sich beispielsweise um einen Handschuhfachschalter, einen Sonnenblendenschalter, Steuerschalter zur Betätigung eines Fensters, Schiebedachs, Lüfters, Radios, Außenlichts, Wischers oder Sitzes handeln oder um Verbraucher, wie Bordcomputer, Zigarettenanzünder u.dgl Bei der vorliegenden Erfindung wird davon ausgegangen, daß der Fahrer oder Beifahrer im Laufe der Zeit wenigstens einen dieser Schalter oder Verbraucher betätigt, wenn er sich noch im Fahrzeug befindet.

Alle Triggereingänge führen zu Eingängen eines ODER-Gatters 18, dessen Ausgang mit dem Triggereingang eines retriggerbaren Zeitglieds 19 verbunden ist. Die Haltezeit dieses Zeitglieds 19 beträgt beispielsweise 1 Stunde, jedoch sind auch kürzere oder längere Haltezeiten möglich. Die Haltezeit sollte jedoch mindestens so lang sein, daß bei einer gewissen Aktivität des Fahrers oder einer weiteren Person im Fahrzeug praktisch eine Dauereinschaltung der Leuchte 9 erreicht wird.

Der Ausgang des Zeitglieds 19 ist einmal direkt mit einem Eingang eines weiteren ODER-Gatters 20 und weiterhin über ein zweites Zeitglied 21 und einen diesem nachgeschalteten astabilen Multivibrator 22 mit einem zweiten Eingang dieses weiteren ODER-Gatters 20 verbunden. Der Ausgang dieses zweiten ODER-Gatters 20 dient zur Stromversorgung, also zum Einschalten der Leuchte 9. Ein in der Praxis hierzu noch erforderlicher Signalverstärker ist zur Vereinfachung nicht dargestellt.

Die Steuerstufe 14 dient dazu, in der dargestellten Schaltstellung des als Innenlichtschalter eingesetzten zweiten Schalters 11 zu gewährleisten, daß die Leuchte 9 nach einer bestimmten Zeit, nämlich der Haltezeit des retriggerbaren Zeitglieds 19, ausgeschaltet wird, wenn keine Aktivität seitens des Fahrers oder einer anderen Person erfolgt, also wenn kein Triggersignal an einen der Eingänge des ODER-Gatters 18 während dieser Haltezeit gelangt. Dies Steuerstufe 14 ist nur bei ausgeschalteter Zündanlage aktiv, also wenn der erste Schalter 10 in der gegenüber der Darstellung von Fig. 1 zweiten Schaltstellung liegt und wenn der zweite Schalter 11 auf Dauereinschaltung der Leuchte 9 gestellt ist, sich also in der dargestellten Schaltstellung befindet. Nur in diesem Falle erfolgt eine Stromversorgung der Steuerstufe 14 über den Spannungsversorgungsanschluß 15. Wird also in der dargestellten Schaltstellung des zweiten Schalters 11 die Zündung ausgeschaltet oder wird bei ausgeschalteter Zündstellung der zweite Schalter in die dargestellte Schaltstellung gelegt, so wird das Zeitglied 19 über das ODER-Gatter 18 getriggert und schaltet die Leuchte 9 während seiner Haltezeit von beispielsweise 1 Stunde für diese Zeit ein. Gelangt während dieser Haltezeit ein weiteres Triggersignal an den Eingang des ODER-Gatters 18 und damit an den Triggereingang des Zeitglieds 19 durch Betätigung eines der eingangs genannten Schalter oder Verbraucher, so erfolgt eine Retriggerung dieses Zeitglieds 19, und die Haltezeit beginnt erneut zu laufen.

Gelangt jedoch während der Haltezeit des ersten Zeitglieds 19 kein weiteres Triggersignal an dessen Eingang, so wird mit der Endflanke des Ausgangssignals dieses Zeitglieds 19 das zweite Zeitglied 21 getriggert, und dieses schaltet während seiner Haltezeit von beispielsweise 10 oder 20 Sekunden den astabilen Multivibrator 22 ein. Dieser bewirkt ein periodisches Ausschalten bzw. Flackern der Leuchte 9, wodurch dem Fahrer oder einem anderen Insassen des Fahrzeugs angezeigt wird, daß die Leuchte 9 demnächst erlischt. Der Fahrer oder die andere Person kann nun einen der vorher genannten Schalter oder Verbraucher kurz betätigen, damit die Leuchte 9 weiter leuchtet. In einem einfacheren Ausführungsbeispiel können die Blöcke 21, 22 jedoch auch entfallen.

Die Steuerstufe 14 kann zweckmäßigerweise als Mikrorechner realisiert werden, jedoch ist selbstverständlich auch eine diskrete Schaltung möglich. Die Zahl der angeschlossenen Schalter und Verbraucher zur Triggerung des Zeitglieds 19 ist aus schaltungstechnischen Gründen in der Praxis begrenzt. Im einfachsten Falle sind lediglich der oder die Türschalter 13 mit einem solchen Triggereingang verbunden, da die Türschalter ohnehin mit dem zweiten Schalter 11 verbunden sind.

Bei dem in Fig. 2 dargestellten Ausführungsbeispiel ist die Elektrik des Fahrzeugs in Form eines Multiplex-Systems realisiert. Ein derartiges Multiplex-System besteht aus einer alle Verbraucher und Schalter verbindenden Multiplex-Leitung 23, wobei eine Vielzahl von Anschlußstationen 24 an diese Multiplex-Leitung 23 angeschlossen sind, über die ihrerseits wieder Schalter und Verbraucher über die Multiplex-Leitung 23 miteinander kommunizieren können. Eine Steuerzentrale 25 steuert die Grundfunktionen des Multiplex-Systems. Bei entsprechender Intelligenz der Anschlußstationen 24 kann auch auf eine Steuerzentrale 25 verzichtet werden. Ein derartiges Multiplex-System ist beispielsweise im Fachbuch "Kraftfahrtechnisches Taschenbuch" der Anmelderin, 21. Auflage, Düsseldorf, VDI-Verlag 1991, Seite 776, beschrieben.

Eine der Anschlußstationen 24 ist mit dem Schalter 11 und der Leuchte 9 verbunden und enthält die Steuerstufe 14, oder es sind entsprechende Funktionen dieser Steuerstufe 14 in einem Mikrorechner dieser Anschlußstation 24 realisiert. Prinzipiell könnten die Steuerstufe 14 oder entsprechende Funktionen auch in der Steuerzentrale 25 enthalten sein. Der Schalter 10 kann entfallen, da die Anschlußstation 24 zur Steuerung der Leuchte 9 über die Multiplex-Leitung 23 erfährt, ob die Zündanlage eingeschaltet ist. Die Zuführung von Triggerleitungen kann ebenfalls entfallen, da auch hier über die Multiplex-Leitung 23 entsprechende Aktivitäten anderer Anschlußstationen 24 erkannt werden und zu einer Triggerung des Zeitglieds verwendet werden. Die Türschalter können mit der gleichen oder mit einer anderen Anschlußstation verbunden sein.

## Patentansprüche

1. Innenbeleuchtung für Fahrzeuge mit wenigstens einer Leuchte (9) und einem Schalter (11), der wenigstens eine Einschaltstellung und eine Ausschaltstellung für die Leuchte (9) aufweist, mit einem Zeitglied (19), das durch den Schalter (11) bei Vorgabe der Einschaltstellung gestartet wird und das während seiner Haltezeit die Leuchte (9) im eingeschalteten Zustand hält, dadurch gekennzeichnet, daß das Zeitglied (19) durch wenigstens einen weiteren Schalter (13) oder Verbraucher retriggerbar ist.

2. Innenbeleuchtung nach Anspruch 1, dadurch gekennzeichnet, daß als weiterer Schalter (13) wenigstens ein Türschalter, Handschuhfachschalter oder Sonnenblenden-schalter vorgesehen ist.

3. Innenbeleuchtung nach Anspruch 1 oder 2, dadurch gekennzeichnet, daß als weiterer Schalter wenigstens ein Steuerschalter zur Betätigung eines Fensters, Schiebedachs, Lüfters, Radios, Außenlichts, Wischers oder Sitzes vorgesehen ist.

4. Innenbeleuchtung nach einem der vorhergehenden Ansprüche, dadurch gekennzeichnet, daß als Verbraucher ein Bordcomputer oder Zigarettenanzünder vorgesehen ist.

5. Innenbeleuchtung nach einem der vorhergehenden Ansprüche, dadurch gekennzeichnet, daß eine das Zeitglied (19) bei eingeschalteter Zündanlage überbrückende oder unwirksam machende Schalteinrichtung (10) vorgesehen ist.

6. Innenbeleuchtung nach einem der vorhergehenden Ansprüche, dadurch gekennzeichnet, daß das Zeitglied (19) mit einer Einrichtung (21, 22) zur Intervallbetätigung der Leuchte (9) kurz vor oder bei Ablauf der Haltezeit vorgesehen ist.

7. Innenbeleuchtung nach Anspruch 6, dadurch gekennzeichnet, daß die Einrichtung (21, 22) zur Intervallbetätigung der Leuchte (9) durch ein Signal ende des Ausgangssignals des Zeitglieds (19) triggerbar ist.

8. Innenbeleuchtung nach einem der vorhergehenden Ansprüche, dadurch gekennzeichnet, daß die Haltezeit des Zeitglieds (19) wenigstens 15 Minuten beträgt.

9. Innenbeleuchtung nach einem der vorhergehenden Ansprüche, dadurch gekennzeichnet, daß die Leuchte (9) oder der die Leuchte schaltende Schalter (11) an wenigstens eine Anschlußstation (24) eines Multiplex-Systems angeschlossen sind, und daß das Zeitglied (19) in der Anschlußstation (24) oder in einer Steuerzentrale (25) des Multiplex-Systems angeordnet ist, wobei eine Aktivität wenigstens einer weiteren der Anschlußstationen (24) des Multiplex-Systems zur Triggerung des Zeitglieds (19) vorgesehen ist.

10. Innenbeleuchtung nach einem der vorhergehenden Ansprüche, gekennzeichnet durch die Ausführung mit einem Mikrorechner.

## Claims

1. Interior lighting for vehicles having at least one luminaire (9) and a switch (11), which has at least one switch-on position and one switch-off position for the luminaire (9), having a timer (19), which is started by the switch (11) given specification of the switch-on position and which keeps the luminaire (9) in the switched-on state during its hold time, characterized in that the timer (19) can be retriggered by at least one further switch (13) or load.

2. Interior lighting according to Claim 1, characterized in that at least one door switch, glovebox switch or sun visor switch is provided as the further switch (13).

3. Interior lighting according to Claim 1 or 2, characterized in that at least one control switch for actuating a window, sliding sunroof, fan, radio, exterior light, wiper or seat is provided as the further switch.

4. Interior lighting according to one of the preceding claims, characterized in that an on-board computer or cigarette lighter is provided as the load.

5. Interior lighting according to one of the preceding claims, characterized in that a switching device (10) is provided which bridges the timer (19) or renders it inactive when the ignition system is switched on.

6. Interior lighting according to one of the preceding claims, characterized in that the timer (19) is provided with a device (21, 22) for intermittent actuation of the luminaire (9) shortly before or upon expiry of the hold time.

7. Interior lighting according to Claim 6, characterized in that the device (21, 22) for intermittent actuation of the luminaire (9) can be triggered by a signal end of the output signal of the timer (19).

8. Interior lighting according to one of the preceding claims, characterized in that the hold time of the timer (19) is at least 15 minutes.

9. Interior lighting according to one of the preceding claims, characterized in that the luminaire (9) or the switch (11) that switches the luminaire is connected to at least one connection station (24) of a multiplex system, and in that the timer (19) is arranged in the connection station (24) or in a central control station (25) of the multiplex system, an activity of at least one other of the connection stations (24) of the multiplex system being provided for triggering the timer (19).

10. Interior lighting according to one of the preceding claims, characterized by the design with a microcomputer.

## Revendications

1. Eclairage intérieur pour véhicules, comprenant au moins un éclairage (9) et un commutateur (11) qui présente au moins une position de branchement et une position de débranchement pour l'éclairage (9), un organe de temporisation (19) que l'on fait démarrer par le commutateur (11) en prédéfinissant la position de branchement et qui garde l'éclairage (9) en position branchée pendant son temps de maintien,
caractérisé en ce que
l'organe de temporisation (19) peut être redéclenché par au moins un autre commutateur (13) ou un autre appareil consommateur.

2. Eclairage intérieur selon la revendication 1,
caractérisé en ce que
comme autre commutateur (13) on prévoit au moins un contacteur de porte, un contacteur de boîte à gants ou un contacteur de pare-soleil.

3. Eclairage intérieur selon la revendication 1 ou 2,
caractérisé en ce que
comme autre interrupteur on prévoit au moins un commutateur de commande servant à actionner une fenêtre, un toit ouvrant, un ventilateur, une radio, les lumières extérieures, l'essuie-glace ou un siège.

4. Eclairage intérieur selon l'une des revendications précédentes,
caractérisé en ce que
comme appareil consommateur on prévoit un ordinateur de bord ou l'allume-cigares.

5. Eclairage intérieur selon l'une des revendications précédentes,
caractérisé en ce que
l'on prévoit un dispositif de commutation (10) qui court-circuite l'organe de temporisation (19) quand le système d'allumage est branché, ou le rend inopérationnel.

6. Eclairage intérieur selon l'une des revendications précédentes,
caractérisé en ce que
l'organe de temporisation (19) est prévu avec un dispositif (21, 22) servant à actionner brièvement de façon intermittente l'éclairage (9) avant ou au cours de l'écoulement du temps de maintien.

7. Eclairage intérieur selon la revendication 6,
caractérisé en ce que
le dispositif (21, 22) qui sert à actionner l'éclairage (9) de façon intermittente, peut être déclenché par une fin du signal de sortie de l'organe de temporisation (19).

8. Eclairage intérieur selon l'une des revendications précédentes,
caractérisé en ce que
le temps de maintien de l'organe de temporisation (19) atteint au moins 15 minutes.

9. Eclairage intérieur selon l'une des revendications précédentes,
caractérisé en ce que
• l'éclairage (9) ou le commutateur (11) qui branche l'éclairage (9), sont raccordés à au moins un poste de raccordement (24) d'un système multiplex, et
• l'organe de temporisation (19) est disposé dans le poste de raccordement (24) ou dans une centrale de commande (25) du système multiplex, une activité d'au moins l'un des autres postes de raccordement (24) du système multiplex étant prévue pour déclencher l'organe de temporisation (19).

10. Eclairage intérieur selon l'une des revendications précédentes,
caractérisé par
sa réalisation avec un micro-ordinateur.
